# EUROPÄISCHE PATENTSCHRIFT

(11) **EP 2 754 006 B1**
(45) Veröffentlichungstag und Bekanntmachung des Hinweises auf die Patenterteilung: **25.11.2020**
(21) Anmeldenummer: 12759056.0
(22) Anmeldetag: 30.08.2012
(51) Int. Cl.: G06F 3/01, G05G 5/03

(54) **BEDIENEINRICHTUNG**
OPERATING ARRANGEMENT
DISPOSITIF DE COMMANDE

(30) Priorität: 05.09.2011 DE 102011082143
(43) Veröffentlichungstag der Anmeldung: 16.07.2014
(73) Patentinhaber: Continental Automotive GmbH, 30165 Hannover (DE)
(72) Erfinder: GUTERMUTH, Uwe, 64289 Darmstadt (DE); KERN, Thorsten, Alexander, 64665 Alsbach (DE); KISSEL, Robert, Wolfgang, 63329 Egelsbach (DE); VORBERG, Sabine, 63773 Goldbach (DE); ZOLLER, Ingo, 63768 Hösbach (DE)
(86) Internationale Anmeldenummer: PCT/EP2012/066861
(87) Internationale Veröffentlichungsnummer: WO 2013/034483

(56) Entgegenhaltungen:
- WO-A2-2012/002664
- DE-A1-102008 058 568
- DE-A1-102009 006 260
- US-A1- 2006 256 075
- US-A1- 2011 291 947

## Beschreibung

Die Erfindung bezieht sich auf eine Bedieneinrichtung mit einem Bedienelement mit haptischer Rückmeldung, wobei das Bedienelement von einer Bedienperson mittels eines Eingabeorgans betätigbar ist, mit einem ersten und einem zweiten flächigen Bauteil, die mit ihren großen Flächen parallel zueinander ausgerichtet und relativ zueinander bewegbar sind, wobei das erste flächige Bauteil das Bedienelement bildet oder seine Bewegung ganz oder teilweise auf das Bedienelement überträgt.

Haptische Rückmeldungen von Bedienelementen werden vor allem dann gefordert, wenn ein Bediener den von ihm ausgeführten Bedienvorgang nicht direkt wahrnehmen kann. Während bei Bedienvorrichtungen mit elektromechanischen Schaltern für einen Bediener das Öffnen oder Schließen der Schaltkontakte durch eine sich ändernde Haptik des Bedienelements wahrnehmbar ist, ist dies bei elektronischen Schaltern nicht notwendigerweise vorhanden. Deshalb sind im Stand der Technik Bedienelemente bekannt, die mittels für den Bediener wahrnehmbaren Bewegungen des Bedienelements eine haptische Rückmeldung über einen erfolgten Bedienvorgang geben. Die bekannten haptischen Bedienelemente beispielsweise für sogenannte Touchscreens erfordern einen großen Bauraum, einen aufwendigen Antrieb und besondere konstruktive Maßnahmen, wenn diese beispielsweise in einem Umfeld eingesetzt werden sollen, das von besonders großen Temperaturunterschieden geprägt ist, wie es beispielsweise in einem Kraftfahrzeug der Fall ist, welches sowohl in arktischer Kälte als auch in sommerlicher Hitze seine Funktionsfähigkeit erhalten muss.

Um bei dem oder den ferromagnetischen flächigen Bauteilen eine definierte Kraft-Weg-Kennlinie zu erhalten, ist eine parallele Führung des oder der durch Kraftbeaufschlagung bewegbaren ferromagnetischen Bauteile notwendig. Diese Führung muss die Parallelität auch bei außermittiger Kraftbeaufschlagung ermöglichen und sollte insbesondere ein Verkippen des oder der ferromagnetischen flächigen Bauteile minimieren oder vermeiden.

Bei einer Bedienvorrichtung der eingangs genannten Art ist es bekannt das oder die ferromagnetischen flächigen Bauteile in einer über die Tiefe des oder der ferromagnetischen flächigen Bauteile hinaus ausgedehnten Gleitführung zu führen. Die Berührungspunkte der Gleitführung bestimmen sich in Tiefe und Position in Abhängigkeit von den zu erwartenden Kräften und der maximal außermittigen Krafteinleitung. Daher ist bei einer derartigen Führung ein tiefer Bauraum erforderlich. Außerdem wird der haptische Eindruck bei Betätigung der Bedieneinrichtung durch die Reibung in der Führung negativ beeinflusst.

Die DE 10 2009 006 260 A1 beschreibt eine Bedieneinrichtung, bei der eine Eingabefläche mittels eines Piezoaktuators antreibbar ist.

Die US 2006/0256075 A1 beschreibt eine Bedienvorrichtung mit den Merkmalen des Oberbegriffs des Patentanspruchs 1.

Aufgabe der Erfindung ist es bei geringem Bauraumerfordernis und einfachem, flachen Aufbau eine zumindest weitgehend von einer Führung unbeeinflusste haptische Rückmeldung zu ermöglichen.

Diese Aufgabe wird erfindungsgemäß durch eine Bedieneinrichtung mit den Merkmalen des Anspruchs 1 gelöst.

Dabei können die flächigen Bauteile bei ihrer Bewegung zwischen der Ruheposition zusätzlich zu der den Abstand zwischen den flächigen Bauteilen verringernden Bewegung in ihren Ebenen relativ zueinander verschiebbar sein.

Durch diese Ausbildung ist bei Parallelbewegung der flächigen Bauteile keine eine große Bautiefe erfordernde Führung nötig, so dass die Bautiefe und damit das Bauraumerfordernis der Bedieneinrichtung gering gehalten werden kann.

Weiterhin werden die flächigen Bauteile immer parallel zueinander gehalten und insbesondere von der jeweiligen Art der Kraftbeaufschlagung abhängige Reibungseinflüsse vermieden.

Damit bleibt auch die haptische Rückmeldung aufgrund der Bewegung des ersten flächigen Bauteils von den Reibungseinflüssen unabhängig und feinfühlig.

In geringen Bauraum erfordernder einfacher Ausbildung bestehen erfindungsgemäß dabei die flächigen Bauteile ganz oder teilweise aus einem ferromagnetischen Werkstoff. Es ist wenigstens eine Spule zwischen den flächigen Bauteilen angeordnet, wobei durch Bestromung der Spule die flächigen Bauteile unter relativer Verschiebung in ihren Ebenen zueinander ihren Abstand zueinander verringernd bewegbar sind.

Eine besonders geringe Bauhöhe wird dabei erreicht, wenn die Spule eine auf einer Leiterplatte angeordnete Flachspule ist.

Sind das erste flächige Bauteil und das zweite flächige Bauteil durch zwei Verbindungen miteinander verbunden, die jeweils mit gleichem Abstand und gleicher Richtung in Erstreckung der Ebenen der flächigen Bauteile mit ihrem einen Befestigungsende an dem ersten flächigen Bauteil und mit ihrem anderen Befestigungsende an dem zweiten flächigen Bauteil direkt oder indirekt befestigt sind, sich zwischen ihren Befestigungsenden und parallel zueinander erstrecken und nahe den Befestigungsenden federelastische Bereiche aufweisen sowie in ihrem Verbindungsbereich zwischen den Befestigungsenden biegesteif ausgebildet sind, wobei die federelastischen Bereiche auf die flächigen Bauteile eine voneinander weg bewegende Vorspannung ausüben, wird durch die gleichen Bauteile und somit bauteilsparend sowohl eine Parallelführung der flächigen Bauteile als auch eine Rückstellung in die Ruheposition erreicht.

Dazu kann in einem ersten Ausführungsbeispiel das erste flächige Bauteil als Verbindung ein erstes Verbindungsstück aufweisen, an dessen zu der Bedienperson hin gerichteten Ende das erste Befestigungsende eines ersten Verbindungselements und an dessen von der Bedienperson wegragenden Ende das erste Befestigungsende eines zweiten Verbindungselements befestigt ist, und dass das zweite flächige Bauteil als Verbindung ein zweites Verbindungsstück aufweist, an dessen von der Bedienperson wegragenden Ende das zweite Befestigungsende des zweiten Verbindungselements und an dessen zu der Bedienperson hin gerichteten Ende das zweite Befestigungsende des ersten Verbindungselements befestigt ist, wobei das von der Bedienperson wegragende Ende des ersten Verbindungsstücks mit Spiel durch eine Öffnung des zweiten flächigen Bauteils ragen und das zu der Bedienperson hin ragende Ende des zweiten Verbindungsstücks mit Spiel durch eine Öffnung des ersten flächigen Bauteils ragen kann.

Ein Verkippen quer zur Erstreckungsrichtung der Verbindungselemente wird dadurch vermieden, dass parallel zu einer aus erstem und zweiten Verbindungsstück und erstem und zweitem Verbindungselement bestehenden Verbindungseinheit eine zweite gleiche Verbindungseinheit angeordnet ist, wobei die ersten Verbindungselemente und/oder die zweiten Verbindungselemente der beiden Verbindungseinheiten durch ein oder mehrere starre Querstege miteinander verbunden sind.

In einem weiteren Ausführungsbeispiel können die Verbindungsbereiche sich bei unbestromter Flachspule rechtwinklig zur Ebene der flächigen Bauteile und bei bestromter Flachspule zur Ebene der Bauteile geneigt erstrecken.

Erstrecken sich die Verbindungsbereiche bei unbestromter Flachspule mit einer größeren Neigung zur Ebene der flächigen Bauteile als bei bestromter Flachspule, so wird die Bewegungsrichtung der bewegten flächigen Bauteile um so mehr zu einer normalen zur Ebene der ausgerichteten Bewegung umgeformt, je größer die Neigung bereits in der Ruheposition ist.

Zu einer Bewegungsrichtung der bewegten flächigen Bauteile nur rechtwinklig zur Ebene der flächigen Bauteile führt es, wenn die Verbindungsbereiche aus zwei über einen weiteren federelastischen Bereich miteinander verbundenen, biegesteifen Verbindungsteilbereichen bestehen, die sich gegenüber der Ebene der flächigen Bauteile unter Winkeln geneigt erstrecken, deren Summe ein Komplimentärwinkel zur Ebene der flächigen Bauteile ist und die über ein sich parallel zur Ebene der flächigen Bauteile erstreckendes Koppelelement mit einander verbunden sind.

Besonders einfach herstellbar und die erforderlichen Bauteile reduzierend ist es, wenn die Verbindungselemente als Stanz-Biegeteil aus Blech ausgebildet sind.

Dabei sind in einfacher Weise die Verbindungsbereiche und Verbindungsteilbereiche dadurch biegesteif ausgebildet, dass die Verbindungselemente im Verbindungsbereich oder in den Verbindungsteilbereichen entlang der Längskanten zwischen den federelastischen Bereichen oder zwischen den federelastischen Bereichen und dem weiteren federelastischen Bereich aus der Blechebene abgebogen sind.

Zu einer anderen ebenso auf einfache Art erreichbaren Biegesteifigkeit der Verbindungsbereiche und Verbindungsteilbereiche führt es, wenn die Verbindungselemente im Verbindungsbereich oder in den Verbindungsteilbereichen eine oder mehrere sich entlang ihrer Längserstreckung zwischen den federelastischen Bereichen erstreckende Einprägungen aufweist.

Um die Bauhöhe der Bedieneinrichtung weiterhin zu minimieren, kann die die Flachspule tragende Leiterplatte fest auf der dem ersten flächigen Bauteil zugewandten Fläche des zweiten flächigen Bauteils angeordnet sein.

Durch diese Ausbildung muss die Leiterplatte nicht mehr eine solche Steifheit aufweisen, dass sie formstabil planar die Flachspule trägt, da sie nun ihre formstabile Eigenschaft von dem formstabilen ersten flächigen Bauteil erhält.

Die Dicke der Leiterplatte muss nur noch eine sichere Isolation zum zweiten flächigen Bauteil gewährleisten und kann so minimalisiert sein.

Sowohl die durch das erste flächige Bauteil bedingte Ebenheit der Leiterplatte, die Vermeidung von Welligkeiten der Leiterplatte sowie deren geringe Dicke ermöglichen es den Abstand zwischen den beiden flächigen Bauteilen und damit auch die Gesamtbauhöhe der Bedieneinrichtung gering zu dimensionieren sowie bei gegebener zur Verfügung stehender Energie größere Stellkräfte zu erzeugen.

Durch das Bestromen der Spule wird ein Magnetfeld aufgebaut und die beiden flächigen Bauteile zueinander gezogen.

Diese Bewegung ist für das Eingabeorgan wie z.B. einen Finger einer Bedienperson direkt oder indirekt wahrnehmbar.

Besonders einfach und dauerhaft ist die Flachspule herstellbar, wenn sie aus auf der Leiterplatte angeordneten Leiterbahnen besteht. Dabei kann die Leiterplatte kupferkaschiert und derart geätzt sein, dass die Leiterbahnen in vorzugsweise spiralförmiger Spulenbahn übrig bleiben.

Anstelle des Ätzens der Leiterbahnen können diese beispielsweise auch durch ein Bedrucken der Leiterplatte mit einem Leiterbahnmaterial wie Silberpaste erzeugt werden.

Zur Konzentration des magnetischen Flusses weist vorzugsweise die Flachspule einen rechtwinklig zur Ebene der flächigen Bauteile sich erstreckenden Spulenkern auf.

Aufgrund des geringen Abstandes zwischen den beiden flächigen Bauteilen ist auch die Höhe des Polschuhes gering. Weiterhin kann aufgrund der geringen einzuhaltenden Toleranzen der Polschuh bis nahe an das erste Bauteil heranreichen, wodurch der magnetische Fluss erhöht wird.

Ist dabei der Spulenkern einteilig mit einem der flächigen Bauteile ausgebildet, so reduziert sich die Anzahl der Bauteile und der Montageaufwand.

Zur planen Befestigung der Leiterplatte auf dem zweiten flächigen Bauteil kann die Leiterplatte mittels einer Klebeschicht auf dem zweiten flächigen Bauteil angeordnet sein.

Eine weitere Reduzierung der Bauhöhe wird dadurch erreicht, dass die Leiterplatte in Schichttechnik, insbesondere in Dickschichttechnik auf dem zweiten flächigen Bauteil aufgetragen ist.

Vorzugsweise ist das zweite flächige Bauteil nichtbeweglich angeordnet, so dass bei einer Bestromung der Flachspule nur das erste Bauteil in Richtung auf das zweite flächige Bauteil bewegt wird.

Zur Bewegung der flächigen Bauteile in ihre Ruheposition bei nichtbestromter Flachspule können das erste flächige Bauteil und das zweite flächige Bauteil bei unbestromter Flachspule von einem Federelement bis zu einem bestimmten Maximalabstand voneinander weg bewegbar sein, wobei in einfacher Ausbildung der Maximalabstand der beiden flächigen Bauteile durch Anschläge bestimmt ist.

Das Bedienelement kann als Anzeige ausgebildet sein. Diese Anzeige kann im einfachsten Fall beispielsweise aus einer Bedruckung mit verschiedenen Ziffern in Form einer Telefontastatur ausgestaltet sein. So können beispielsweise verschiedene Ziffern ausgewählt werden, wenn mit dem Bedienorgan das Bedienelement an der entsprechenden Ziffer berührt wird und die Anzeige eine entsprechende Vorrichtung aufweist, mit der die Position des Eingabeorgans auf der Anzeige bestimmbar ist.

Die Anzeige kann dabei als elektrooptische Anzeige ausgebildet sein, bei der z.B. verschiedene Menüs, Untermenüs oder Einzelwerte auf der Anzeige dargestellt werden können, die dann durch eine entsprechende Berührung der Anzeige an der entsprechenden Position der Darstellung des auszuwählenden Menüs, Untermenüs oder Wertes detektiert werden. Derartige optoelektronische Anzeigen können beispielsweise als Leuchtdiodenmatrix, organisches Leuchtdiodendisplay oder Flüssigkristalldisplay ausgebildet sein und sind bereits als sogenannte Touchscreens bekannt.

Die Flachspulen werden zum Bewegen der flächigen Bauteile zueinander mit einem Gleichstrom oder einem niederfrequenten Wechselstrom bestromt. Zusätzlich kann dieser Strom mit einer Frequenz im Hörbereich, wie beispielsweise 1 Kilohertz moduliert werden, so dass diese Frequenz zusätzlich hörbar ist. So kann ein Klick hörbar sein, der sich anhört, als sei ein elektromagnetischer Schalter geöffnet oder geschlossen worden.

Ausführungsbeispiele der Erfindung sind in der Zeichnung dargestellt und werden im Folgenden näher beschrieben. Es zeigen:
- Figur 1: eine Seitenansicht im Schnitt eines ersten Ausführungsbeispiels einer Bedieneinrichtungin nicht bestromter Ruheposition,
- Figur 2: die Bedieneinrichtung nach Figur 1 in bestromter Betätigungsposition,
- Figur 3: eine Seitenansicht im Schnitt eines zweiten Ausführungsbeispiels einer Bedieneinrichtung in nicht bestromter Ruheposition,
- Figur 4: die Bedieneinrichtung nach Figur 3 in bestromter Betätigungsposition,
- Figur 5: eine Seitenansicht im Schnitt eines dritten Ausführungsbeispiels einer Bedieneinrichtung in nicht bestromter Ruheposition,
- Figuren: vier Ausführungsbeispiele von Verbindungselementen 6a - 6d in Ruheposition,
- Figur 7: eine Seitenansicht im Schnitt eines vierten Ausführungsbeispiels einer Bedieneinrichtung in nicht bestromter Ruheposition,
- Figur 8: die Bedieneinrichtung nach Figur 7 in bestromter Betätigungsposition,
- Figur 9: eine Seitenansicht im Schnitt eines fünften Ausführungsbeispiels einer Bedieneinrichtung in nicht bestromter Ruheposition,
- Figur 10: eine perspektivische Draufsicht der Bedieneinrichtung entsprechend Figur 9,
- Figur 11: eine perspektivische Unteransicht der Bedieneinrichtung entsprechend Figur 9,
- Figur 12: eine erste perspektivische Ansicht einer Verbindungseinheit der Bedieneinrichtung nach Figur 10,
- Figur 13: eine zweite perspektivische Ansicht einer Verbindungseinheit der Bedieneinrichtung nach Figur 10.

Die in den Figuren dargestellte Bedieneinrichtungen weisen ein einer Bedienperson 1 zugewandtes erstes flächiges Bauteil 2 aus einem ferromagnetischen Werkstoff auf, das quer zu seiner Flächenerstreckung beweglich ist.

Parallel dazu ist ein zweites flächiges Bauteil 3 aus einem ferromagnetischen Werkstoff nichtbeweglich angeordnet.

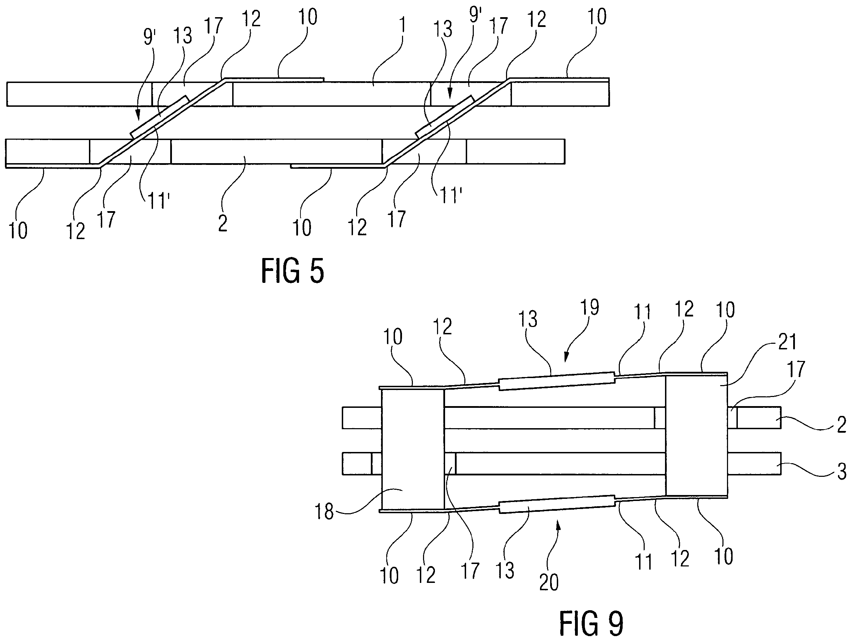

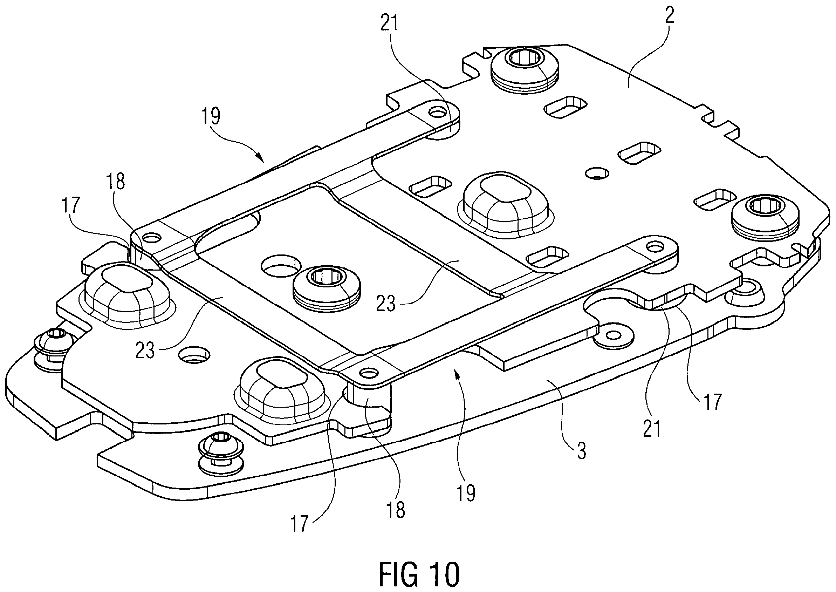

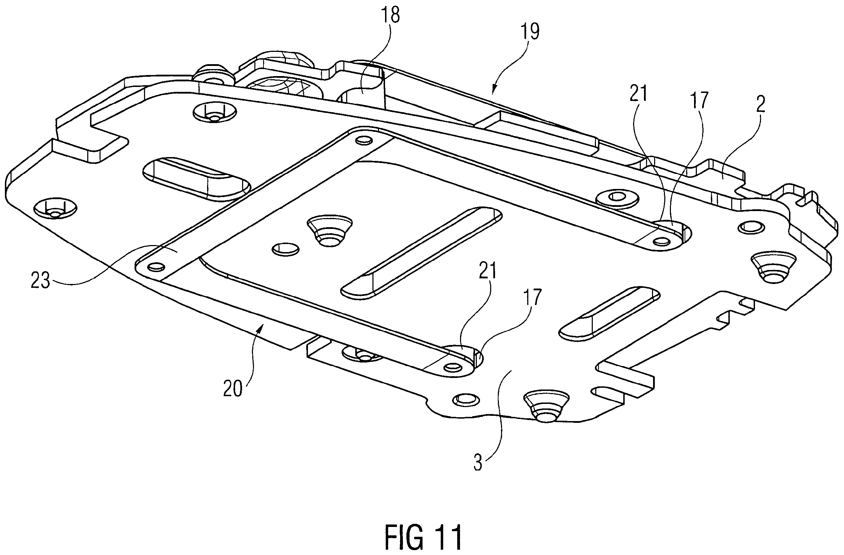

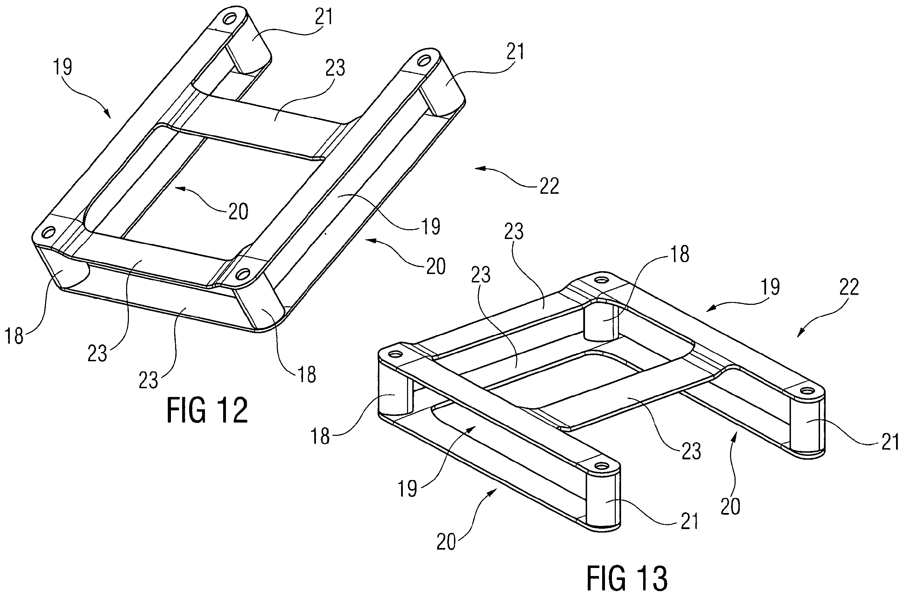

Das zweite flächige Bauteil 3 weist in Abständen zueinander Spulenkerne 4 auf, die zu dem ersten flächigen Bauteil 2 gerichtet und mit dem zweiten flächigen Bauteil 3 einteilig ausgebildet sind (in den Figuren 9 - 13 nicht dargestellt).

Die Spulenkerne 4 sind jeweils von einem Paar spiralartiger Flachspulen 5, 5' umschlossen.

Die Flachspulen 5, 5' sind auf einer sich über die Fläche der flächigen Bauteile 2, 3 erstreckenden, als Keramiksubstrat ausgebildeten Leiterplatte 6 aufgedruckt, wobei die Flachspulen 5 auf der dem ersten flächigen Bauteil 2 und die Flachspulen 5' auf der dem zweiten flächigen Bauteil 3 zugewandten Seite auf die Leiterplatte 6 aufgedruckt sind.

Die Spulenkerne 4 ragen durch entsprechend in der Leiterplatte 6 ausgebildete Ausnehmungen 7.

Mittels einer Klebeschicht 8 ist die die Flachspulen 5, 5' tragende Leiterplatte 6 auf der dem ersten flächigen Bauteil 2 zugewandte Fläche des zweiten flächigen Bauteils 3 aufgeklebt.

Die Leiterplatte 6 könnte aber auch durch eine Schraubverbindung mit dem zweiten flächigen Bauteil 3 verbunden sein.

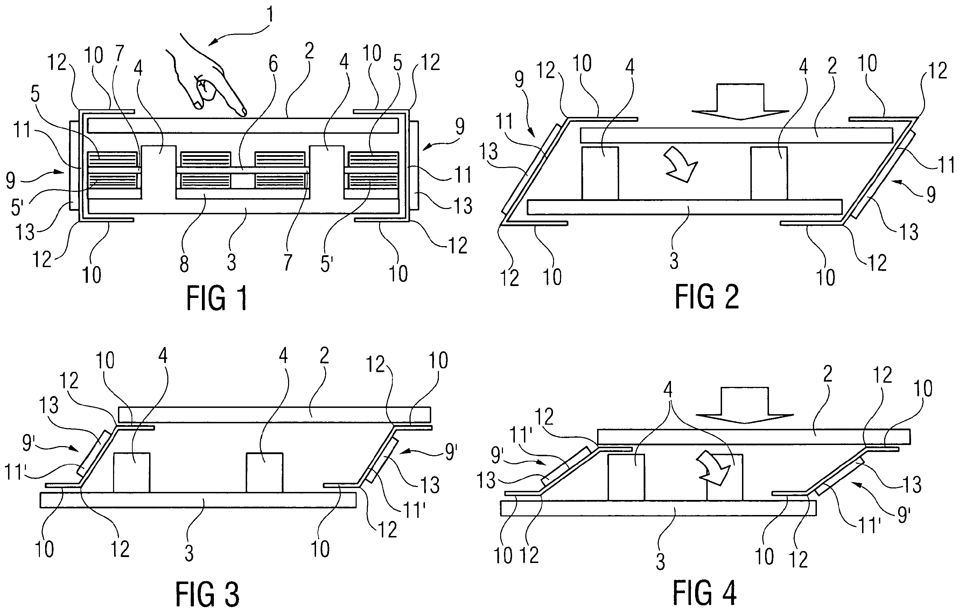

Zur besseren Übersichtlichkeit sind die Flachspulen 5, 5', die Leiterplatte 6 und die Klebeschicht 8 nur in Figur 1 dargestellt.

Bei dem Ausführungsbeispiel der Figuren 1 und 2 sind das erste flächige Bauteil 2 und das zweite flächige Bauteil 3 an ihren einander gegenüberliegenden Randbereichen von gleichen, als Stanz-Biegeteil aus einem Federblech ausgebildeten Verbindungselementen 9 umgriffen, die in ihrer in Figur 1 dargestellten entspannten Lage einen senkrecht zur Ebene der flächigen Bauteile 2, 3 stehenden Verbindungsbereiche 11 und an dessen beiden Enden rechtwinklig zu den Verbindungsbereichen 11 gerichtete Befestigungsenden 10 aufweisen.

Die Befestigungsenden 10 sind an den einander entfernten Flächen der ersten und zweiten flächigen Bauteile 2 und 3 befestigt.

Die rechtwinkligen Übergänge von den Verbindungsbereichen 11 zu den Befestigungsenden 10 der aus einem Federblech bestehenden Verbindungselemente 9 bilden federelastische Bereiche 12.

Die federelastischen Bereiche 12 sind in der in Figur 1 dargestellten Ruheposition ohne oder ohne wesentliche Federspannung. Werden die Befestigungsenden 10 durch Kraftbeaufschlagung aus ihrer zum Verbindungsbereich 11 senkrechten Ausrichtung ausgelenkt (Figur 2), baut sich in den federelastischen Bereichen 12 eine Federspannung auf, die nach Beendigung der Kraftbeaufschlagung die Verbindungselemente 9 und das damit fest verbundene erste flächige Bauteil 2 wieder in die Ruheposition bewegt.

Entlang ihrer Längskanten weisen die Verbindungsbereiche 14 zwischen den federelastischen Bereichen 12 aus der Ebene der Federfläche rechtwinklig abgebogene Versteifungen 13 auf, so dass die Verbindungsbereiche 11 biegesteif sind.

Bei dem Ausführungsbeispiel der Figuren 3 bis 5 sind das erste und das zweite flächige Bauteil 2 und 3 durch zwei gleiche als Stanz-Biegeteile aus einem Federblech ausgebildete Verbindungselemente 9' an ihren einander gegenüberliegenden Enden miteinander verbunden.

In der in Figur 3 dargestellten Ruheposition erstrecken sich die wie in den Figuren 1 und 2 mit durch Versteifungen 13 versehenen Verbindungsbereiche 11' der Verbindungselemente 9' parallel zueinander unter einem gleichen Winkel gegenüber den Ebenen des ersten und zweiten flächigen Bauteils 2 und 3 geneigt und sind mit sich parallel zu den flächigen Bauteilen 2 und 3 erstreckenden Befestigungsenden 10 an den einander zugewandten Flächen der flächigen Bauteile 2 und 3 befestigt.

In Figur 5 sind die Verbindungselemente 9' mit ihren zweiten Befestigungsenden 10 an der dem ersten flächigen Bauteil 2 abgewandten Seite des zweiten flächigen Bauteils 3 befestigt und ragen mit ihren Verbindungsbereichen 11' mit Spiel durch Öffnungen 17 in dem zweiten flächigen Bauteil 3 sowie in dem ersten flächigen Bauteil 2 hindurch. Mit ihren ersten Befestigungsenden 10 sind die Verbindungselemente 9' an der dem zweiten flächigen Bauteil 3 abgewandten Seite des ersten flächigen Bauteils 2 befestigt.

Die Übergänge von dem Verbindungsbereich 11' zu den Befestigungsenden 10 bilden in den Figuren 3 und 4 wie in den Figuren 1 und 2 federelastische Bereiche 12, die bei der in den Figur 3 und 5 dargestellten Ruheposition zumindest weitgehend spannungslos sind.

Bei Auslenkung der Verbindungselemente 9' aus der Ruheposition wird wie bei den Verbindungselementen 9 eine Federspannung in den federelastischen Bereichen 12 aufgebaut, die die Verbindungselemente 9' wieder in ihre Ruheposition zurückstellen möchte.

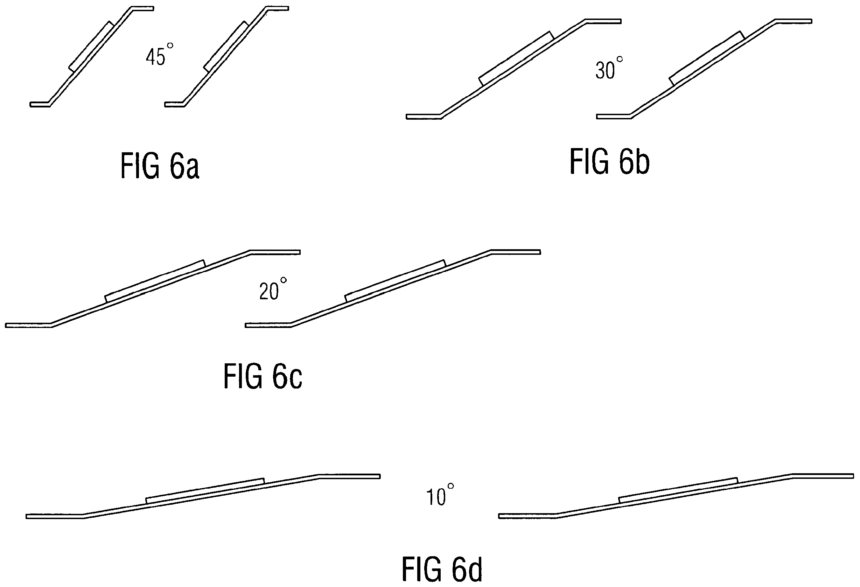

Die Figuren 6a bis 6d zeigen Verbindungselemente 9' in Ruheposition mit unterschiedlichen Neigungen. Je geringer die Neigung umso größer die Länge der Verbindungselemente 9' und damit auch eine Robustheit gegenüber Überbelastungsfällen.

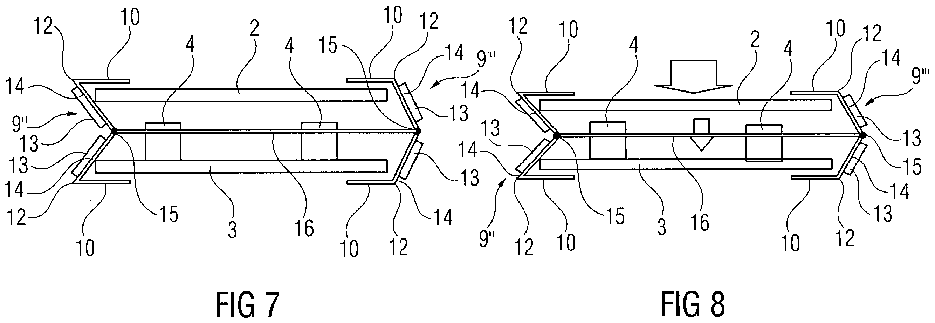

Bei dem Ausführungsbeispiel der Figuren 7 und 8 sind das erste und das zweite flächige Bauteil 2 und 3 durch zwei als Stanz-Biegeteile aus einem Federblech ausgebildete Verbindungselemente 9'', 9''' an ihren einander gegenüberliegenden Enden miteinander verbunden.

Die Verbindungselemente 9'', 9''' weisen Befestigungsenden 10 auf, mit denen sie an den einander abgewandten Flächen der flächigen Bauteile 2 und 3 befestigt sind.

Die Befestigungsenden 10 jedes der Verbindungselemente 9'', 9''' sind über zwei Versteifungen 13 aufweisende Verbindungsteilbereiche 14 miteinander verbunden.

Die beiden Verbindungsteilbereiche 14 jedes Verbindungselements 9'', 9''' stehen V-förmig zueinander und sind mit ihren einander entfernten Enden über federelastische Bereiche 12 jeweils mit einem Befestigungsende 10 verbunden.

An den einander zugewandten Enden sind die Verbindungselemente 14 über einen weiteren federelastischen Bereich 15 miteinander verbunden.

Die "V" der Verbindungselemente 9'', 9''' sind in die gleiche Richtung parallel zu den flächigen Bauteilen 2 und 3 gerichtet und an ihren weiteren federelastischen Bereichen 15 durch ein starres Koppelelement 16 miteinander verbunden.

Bei dem Ausführungsbeispiel der Figuren 9 bis 13 weist das erste flächige Bauteil 2 ein erstes Verbindungsstück 18 auf, an dessen zu der Bedienperson 1 hin gerichteten Ende das erste Befestigungsende 10 eines ersten Verbindungselements 19 und an dessen von der Bedienperson 1 wegragenden Ende das erste Befestigungsende 10 eines zweiten Verbindungselements 20 befestigt ist. Das zweite flächige Bauteil 3 weist ein zweites Verbindungsstück 21 auf, an dessen von der Bedienperson 1 wegragenden Ende das zweite Befestigungsende 10 des zweiten Verbindungselements 20 und an dessen zu der Bedienperson 1 hin gerichteten Ende das zweite Befestigungsende 10 des ersten Verbindungselements 19 befestigt ist.

Wie bei den vorherigen Ausführungsbeispielen weisen die Verbindungselemente 19 und 20 Verbindungsbereiche 11, Befestigungsenden 10, Versteifungen 13 und federelastische Bereiche 12 auf.

Das von der Bedienperson 1 wegragende Ende des ersten Verbindungsstücks 18 ragt dabei mit Spiel durch eine Öffnung 17 des zweiten flächigen Bauteils 3 und das zu der Bedienperson 1 hin ragende Ende des zweiten Verbindungsstücks 21 ragt mit Spiel durch eine Öffnung 17 des ersten flächigen Bauteils 2.

Das erste und zweite Verbindungsstück 18 und 21 sowie das erste und zweite Verbindungselement 19 und 20 bilden eine erste Verbindungseinheit 22. Parallel zur der ersten Verbindungseinheit 22 ist eine gleiche Verbindungseinheit 22' angeordnet, wobei die beiden Verbindungseinheiten durch drei starre Querstege 23 miteinander verbunden sind.

Wenn von einer nicht dargestellten Sensorik erkannt wird, dass ein Finger der Bedienperson 1 das erste flächige Bauteil 2 berührt, werden die Flachspulen 5, 5' bestromt.

Werden die Flachspulen 5, 5' von dem Strom durchflossen, wird ein magnetischer Fluss in die flächigen Bauteile 2, 3 eingeprägt und so ein magnetischer Kreis geschlossen, so dass die beiden flächigen Bauteile 2, 3 entgegen der Kraft der federelastischen Bereiche 12 parallel relativ zueinander gezogen werden, ohne sich zu berühren.

Bei Beendigung des Stromdurchflusses durch die Flachspulen 5, 5' werden die flächigen Bauteile 2, 3 durch die federelastischen Bereiche 12 wieder in ihre Ruheposition zurückbewegt.

Bei den Ausführungsbeispielen der Figuren 1 bis 5 und 9 bis 13 erfolgt bei der Zueinanderbewegung der flächigen Bauteile 2, 3 gleichzeitig ein seitliches Versetzen dieser Bauteile 2, 3, während bei dem Ausführungsbeispiel der Figuren 7 und 8 ein solches seitliches Versetzen nicht erfolgt.

Das erste flächige Bauteil 2 bildet gleichzeitig ein Bedienelement, so dass die Bedienperson die Bewegung des ersten flächigen Bauteils 2 haptisch erfasst.

## Patentansprüche

1. Bedieneinrichtung mit einem Bedienelement mit haptischer Rückmeldung, wobei das Bedienelement von einer Bedienperson 1 mittels eines Eingabeorgans betätigbar ist, mit einem ersten und einem zweiten flächigen Bauteil, die mit ihren großen Flächen parallel zueinander ausgerichtet und relativ zueinander bewegbar sind, wobei das erste flächige Bauteil das Bedienelement bildet oder seine Bewegung ganz oder teilweise auf das Bedienelement überträgt, wobei die flächigen Bauteile (2, 3) unter Beibehaltung ihrer Parallelität zueinander zwischen einer Ruheposition und einer Betätigungsposition geführt sind, wobei in der Betätigungsposition der Abstand zwischen den beiden flächigen Bauteilen (2, 3) geringer ist, als in der Ruheposition und die beiden flächigen Bauteile (2, 3) in ihre Ruheposition federbeaufschlagt sind, und wobei die flächigen Bauteile (2, 3) durch einen Aktuator entgegen der Federkraft aus ihrer Ruheposition in ihre Betätigungsposition bewegbar antreibbar sind, wobei die flächigen Bauteile (2, 3) ganz oder teilweise aus einem ferromagnetischen Werkstoff bestehen,
**dadurch gekennzeichnet,**
**dass** wenigstens eine Spule zwischen den flächigen Bauteilen (2, 3) angeordnet ist, wobei durch Bestromung der Spule die flächigen Bauteile (2, 3) unter relativer Verschiebung in ihren Ebenen zueinander ihren Abstand zueinander verringernd bewegbar sind,
**dass** die Spule eine auf einer Leiterplatte (6) angeordnete Flachspule (5, 5') ist.

2. Bedieneinrichtung nach einem der vorhergehenden Ansprüche, **dadurch gekennzeichnet, dass** das erste flächige Bauteil (2) und das zweite flächige Bauteil (3) durch zwei Verbindungen miteinander verbunden sind, die jeweils mit gleichem Abstand und gleicher Richtung in Erstreckung der Ebenen der flächigen Bauteile (2, 3) mit ihrem einen Befestigungsende (10) an dem ersten flächigen Bauteil (2) und mit ihrem anderen Befestigungsende (10) an dem zweiten flächigen Bauteil (3) direkt oder indirekt befestigt sind, sich zwischen ihren Befestigungsenden (10) und parallel zueinander erstrecken und nahe den Befestigungsenden (10) federelastische Bereiche (12) aufweisen sowie in ihrem Verbindungsbereich (11, 11') zwischen den Befestigungsenden (10) biegesteif ausgebildet sind, wobei die federelastischen Bereiche (12) auf die flächigen Bauteile (2, 3) eine voneinander weg bewegende Vorspannung ausüben.

3. Bedieneinrichtung nach Anspruch 2, **dadurch gekennzeichnet, dass** das erste flächige Bauteil (2) als Verbindung ein erstes Verbindungsstück (18) aufweist, an dessen zu der Bedienperson (1) hin gerichteten Ende das erste Befestigungsende (10) eines ersten Verbindungselements (19) und an dessen von der Bedienperson (1) wegragenden Ende das erste Befestigungsende (10) eines zweiten Verbindungselements (20) befestigt ist, und dass das zweite flächige Bauteil (3) als Verbindung ein zweites Verbindungsstück (21) aufweist, an dessen von der Bedienperson (1) wegragenden Ende das zweite Befestigungsende (10) des zweiten Verbindungselements (20) und an dessen zu der Bedienperson (1) hin gerichteten Ende das zweite Befestigungsende (10) des ersten Verbindungselements (19) befestigt ist.

4. Bedieneinrichtung nach Anspruch 3, **dadurch gekennzeichnet, dass** das von der Bedienperson (1) wegragende Ende des ersten Verbindungsstücks (18) mit Spiel durch eine Öffnung (17) des zweiten flächigen Bauteils (3) ragt und das zu der Bedienperson (1) hin ragende Ende des zweiten Verbindungsstücks (21) mit Spiel durch eine Öffnung (17) des ersten flächigen Bauteils (2) ragt.

5. Bedieneinrichtung nach einem der Ansprüche 3 und 4 **dadurch gekennzeichnet, dass** parallel zu einer aus erstem und zweiten Verbindungsstück (18, 21) und erstem und zweitem Verbindungselement (19, 20) bestehenden Verbindungseinheit (22) eine zweite gleiche Verbindungseinheit (22') angeordnet ist, wobei die ersten Verbindungselemente (19) und/oder die zweiten Verbindungselemente (20) der beiden Verbindungseinheiten (22, 22') durch ein oder mehrere starre Querstege (23) miteinander verbunden sind.

6. Bedieneinrichtung nach Anspruch 2, **dadurch gekennzeichnet, dass** die Verbindungsbereiche (11') sich bei unbestromter Flachspule mit einer größeren Neigung zur Ebene der flächigen Bauteile (2, 3) erstrecken als bei bestromter Flachspule.

7. Bedieneinrichtung nach Anspruch 2, **dadurch gekennzeichnet, dass** die Verbindungsbereiche aus zwei über einen weiteren federelastischen Bereich (15) miteinander verbundenen, biegesteifen Verbindungsteilbereichen (14) bestehen, die sich gegenüber der Ebene der flächigen Bauteile (2, 3) unter Winkeln geneigt erstrecken, deren Summe ein Komplimentärwinkel zur Ebene der flächigen Bauteile (2, 3) ist und die über ein sich parallel zur Ebene der flächigen Bauteile (2, 3) erstreckendes Koppelelement (16) mit einander verbunden sind.

8. Bedieneinrichtung nach einem der vorhergehenden Ansprüche, **dadurch gekennzeichnet, dass** die Verbindungselemente (9, 9', 9'', 9''') als Stanz-Biegeteil aus Blech ausgebildet sind.

9. Bedieneinrichtung nach Anspruch 8, **dadurch gekennzeichnet, dass** die Verbindungselemente (9, 9', 9'' 9''') im Verbindungsbereich (11, 11') oder in den Verbindungsteilbereichen (14) entlang der Längskanten zwischen den federelastischen Bereichen (12) oder zwischen den federelastischen Bereichen (12) und dem weiteren federelastischen Bereich (15) aus der Blechebene abgebogen sind.

10. Bedieneinrichtung nach Anspruch 8, **dadurch gekennzeichnet, dass** die Verbindungselemente im Verbindungsbereich oder in den Verbindungsteilbereichen eine oder mehrere sich entlang ihrer Längserstreckung zwischen den federelastischen Bereichen erstreckende Einprägungen aufweist.

11. Bedieneinrichtung nach einem der vorhergehenden Ansprüche, **dadurch gekennzeichnet, dass** die die Flachspule (5, 5') tragende Leiterplatte (6) fest auf der dem ersten flächigen Bauteil (2) zugewandten Fläche des zweiten flächigen Bauteils (3) angeordnet ist.

12. Bedieneinrichtung nach Anspruch : 11, **dadurch gekennzeichnet, dass** die Leiterplatte (6) mittels einer Klebeschicht (8) auf dem zweiten flächigen Bauteil (3) angeordnet oder in Schichttechnik auf dem zweiten flächigen Bauteil aufgetragen ist.

13. Bedieneinrichtung nach einem der vorhergehenden Ansprüche, **dadurch gekennzeichnet, dass** das Bedienelement als Anzeige ausgebildet ist.

## Claims

1. Operator control device having an operator control element with haptic feedback, wherein the operator control element can be activated by an operator (1) by means of an input member, having a first and a second planar component which are oriented parallel to one another with their large surfaces and can move relative to one another, wherein the first planar component forms the operator control element or transmits its movement entirely or partially to the operator control element, wherein the planar components (2, 3) are guided between a position of rest and an activation position while maintaining their parallel position with respect to one another, wherein in the activation position the distance between the two planar components (2, 3) is smaller than in the position of rest, and the two planar components (2, 3) are spring loaded in their position of rest, and wherein the planar components (2, 3) can be driven by an actuator counter to the spring force such that they can be moved out of their position of rest into their activation position, wherein the planar components (2, 3) are composed entirely or partially of a ferromagnetic material, **characterized in that** at least one coil is arranged between the planar components (2, 3), wherein by energizing the coil the planar components (2, 3) can be moved with relative displacement in their planes with respect to one another such that their distance from one another is reduced, **in that** the coil is a flat coil (5, 5') which is arranged on a printed circuit board (6).

2. Operator control device according to Claim 1, **characterized in that** the first planar component (2) and the second planar component (3) are connected to one another by two connections which are each directly or indirectly attached at the same distance and in the same direction in the extent of the planes of the planar components (2, 3) to the first planar component (2) by their one attachment end (10) and to the second planar component (3) by their other attachment end (10), extend between their attachment ends (10) and parallel to one another and have spring-elastic regions (12) near to the attachment ends (10), and are of flexurally rigid design in their connecting region (11, 11') between the attachment ends (10), wherein the spring-elastic regions (12) exert on the planar components (2, 3) a prestress moving away from one another.

3. Operator control device according to Claim 2, **characterized in that** the first planar component (2) has as a connection a first connecting piece (18) to whose end directed toward the operator (1) the first attachment end (10) of a first connecting element (19) is attached, and to whose end projecting away from the operator (1) the first attachment end (10) of a second connecting element (20) is attached, and **in that** the second planar component (3) has as a connection a second connecting piece (21) to whose end projecting away from the operator (1) the second attachment end (10) of the second connecting element (20) is attached, and to whose end directed toward the operator (1) the second attachment end (10) of the first connecting element (19) is attached.

4. Operator control device according to Claim 3, **characterized in that** the end, projecting away from the operator (1), of the first connecting piece (18) projects with play through an opening (17) in the second planar component (3), and the end, projecting toward the operator (1), of the second connecting piece (21) projects with play through an opening (17) in the first planar component (2).

5. Operator control device according to either of Claims 3 and 4, **characterized in that** a second identical connecting unit (22') is arranged parallel to a connecting unit (22) composed of first and second connecting pieces (18, 21) and first and second connecting elements (19, 20), wherein the first connecting elements (19) and/or the second connecting elements (20) of the two connecting units (22, 22') are connected to one another by one or more rigid crossmembers (23).

6. Operator control device according to Claim 2, **characterized in that** the connecting regions (11') extend with a greater incline with respect to the plane of the planar components (2, 3) when the flat coil is not energized than when the flat coil is energized.

7. Operator control device according to Claim 2, **characterized in that** the connecting regions are composed of two flexurally rigid connecting partial regions (14) which are connected to one another via a further spring-elastic region (15) and extend at an incline with respect to the plane of the planar components (2, 3) at angles whose sum is a complementary angle with respect to the plane of the planar components (2, 3), and which connecting partial regions (14) are connected to one another via a coupling element (16) which extends parallel to the plane of the planar components (2, 3).

8. Operator control device according to one of the preceding claims, **characterized in that** the connecting elements (9, 9', 9'', 9''') are embodied as a punched bent part made of sheet metal.

9. Operator control device according to Claim 8, **characterized in that** the connecting elements (9, 9', 9'', 9''') are bent out of the plane of the sheet metal in the connecting region (11, 11') or in the connecting partial regions (14) along the longitudinal edges between the spring-elastic regions (12) or between the spring-elastic regions (12) and the further spring-elastic region (15).

10. Operator control device according to Claim 8, **characterized in that** the connecting elements have one or more impressions extending along their longitudinal extent between the spring-elastic regions, in the connecting region or in the connecting partial regions.

11. Operator control device according to one of the preceding claims, **characterized in that** the printed circuit board (6) which supports the flat coil (5, 5') is fixedly arranged on the surface of the second planar component (3) facing the first planar component (2).

12. Operator control device according to Claim 11, **characterized in that** the printed circuit board (6) is arranged on the second planar component (3) by means of an adhesive layer (8) or is applied to the second planar component using film technology.

13. Operator control device according to one of the preceding claims, **characterized in that** the operator control element is embodied as a display.

## Revendications

1. Dispositif de commande comprenant un élément de commande à rétroaction haptique, dans lequel l'élément de commande peut être actionné par un opérateur (1) au moyen d'un organe d'entrée, comportant des premier et deuxième éléments plans qui sont orientés de manière à ce que leurs grandes surfaces soient parallèles l'une à l'autre et qui sont mobiles l'un par rapport à l'autre, dans lequel le premier élément plan forme l'élément de commande ou transmet son mouvement en totalité ou en partie à l'élément de commande, dans lequel les éléments plans (2, 3) sont guidés, tout en conservant leur parallélisme l'un par rapport à l'autre, entre une position de repos et une position d'actionnement, dans lequel la distance entre les deux éléments plans (2, 3) dans la position d'actionnement est moindre que dans la position de repos et les deux éléments plans (2, 3) sont sollicités par ressort dans leur position de repos, et dans lequel les éléments plans (2, 3) peuvent être entraînés par un actionneur de manière à pouvoir être déplacés contre la force de ressort de leur position de repos vers leur position d'actionnement, dans lequel les éléments plans (2, 3) sont en totalité ou en partie constitués d'un matériau ferromagnétique, **caractérisé en ce qu'**au moins une bobine est disposée entre les éléments plans (2, 3), dans lequel les éléments plans (2, 3) peuvent être déplacés par alimentation en courant de la bobine, en se déplaçant les uns par rapport aux autres dans leurs plans et en réduisant leur distance les uns par rapport aux autres, et **en ce que** la bobine est une bobine plane (5, 5') disposée sur une carte de circuit imprimé (6).

2. Dispositif de commande selon l'une des revendications précédentes, **caractérisé en ce que** le premier élément plan (2) et le deuxième élément plan (3) sont reliés l'un à l'autre par deux liaisons qui sont respectivement fixées à la même distance et dans la même direction dans le prolongement des plans des éléments plans (2, 3) de manière à ce que leur première extrémité de fixation (10) soit directement ou indirectement fixée au premier élément plan (2) et à ce que leur autre extrémité de fixation (10) soit directement ou indirectement fixée au deuxième élément plan (3), qui s'étendent entre leurs extrémités de fixation (10) et parallèlement les unes aux autres et présentent des zones élastiques (12) à proximité des extrémités de fixation (10) et qui sont conçues pour être rigides en flexion dans leur zone de liaison (11, 11') entre les extrémités de fixation (10), dans lequel les zones élastiques (12) exercent sur les éléments plans (2, 3) une précontrainte qui les éloigne les unes des autres.

3. Dispositif de commande selon la revendication 2, **caractérisé en ce que** le premier élément plan (2) présente, en tant que liaison, une première pièce de liaison (18) à l'extrémité, dirigée vers l'opérateur (1), de laquelle est fixée la première extrémité de fixation (10) d'un premier élément de liaison (19) et à l'extrémité, s'écartant de l'opérateur (1), de laquelle est fixée la première extrémité de fixation (10) d'un deuxième élément de liaison (20), et **en ce que** le deuxième élément plan (3) présente, en tant que liaison, une deuxième pièce de liaison (21), à l'extrémité, s'écartant de l'opérateur (1), de laquelle est fixée la deuxième extrémité de fixation (10) du deuxième élément de liaison (20) et à l'extrémité, dirigée vers l'opérateur (1), de laquelle est fixée la deuxième extrémité de fixation (10) du premier élément de liaison (19).

4. Dispositif de commande selon la revendication 3, **caractérisé en ce que** l'extrémité du premier élément de liaison (18) s'écartant de l'opérateur (1) fait saillie avec jeu à travers une ouverture (17) du deuxième élément plan (3) et l'extrémité du deuxième élément de liaison (21) se rapprochant de l'opérateur (1) fait saillie avec jeu à travers une ouverture (17) du premier élément plan (2).

5. Dispositif de commande selon l'une des revendications 3 et 4, **caractérisé en ce qu'**une deuxième unité de liaison identique (22') est disposée parallèlement à une unité de liaison (22) constituée d'une première et d'une deuxième pièce de liaison (18, 21) et d'un premier et d'un deuxième élément de liaison (19, 20), dans lequel les premiers éléments de liaison (19) et/ou les deuxièmes éléments de liaison (20) des deux unités de liaison (22, 22') sont reliés l'un à l'autre par une ou plusieurs barres transversales rigides (23).

6. Dispositif de commande selon la revendication 2, **caractérisé en ce que** les zones de liaison (11') s'étendent avec une plus grande inclinaison par rapport au plan des éléments plans (2, 3) lorsque la bobine plane n'est pas alimentée en courant que lorsque la bobine plane est alimentée en courant.

7. Dispositif de commande selon la revendication 2, **caractérisé en ce que** les zones de liaison sont constituées de deux zones de liaison (14) rigides en flexion, qui sont reliées l'une à l'autre par une autre zone élastique (15) et qui s'étendent par rapport au plan des éléments plans (2, 3) sous des angles dont la somme est un angle complémentaire par rapport au plan des éléments plans (2, 3) et qui sont reliées l'une à l'autre par un élément de couplage (16) s'étendant parallèlement au plan des éléments plans (2, 3).

8. Dispositif de commande selon l'une des revendications précédentes, **caractérisé en ce que** les éléments de liaison (9, 9', 9'', 9''') sont réalisés sous la forme d'une pièce de tôle découpée et pliée.

9. Dispositif de commande selon la revendication 8, **caractérisé en ce que** les éléments de liaison (9, 9', 9'', 9''') sont pliés hors du plan de la tôle dans la zone de liaison (11, 11') ou dans les zones partielles de liaison (14) le long des bords longitudinaux entre les zones élastiques (12) ou entre les zones élastiques (12) et l'autre zone élastique (15).

10. Dispositif de commande selon la revendication 8, **caractérisé en ce que** les éléments de liaison présentent, dans la zone de liaison ou dans les zones partielles de liaison, une ou plusieurs encoches s'étendant le long de leur extension longitudinale entre les zones élastiques.

11. Dispositif de commande selon l'une des revendications précédentes, **caractérisé en ce que** la carte de circuit imprimé (6) portant la bobine plane (5, 5') est disposée de manière fixe sur la surface du deuxième élément plan (3) qui est tournée vers le premier élément plan (2).

12. Dispositif de commande selon la revendication 11, **caractérisé en ce que** la carte de circuit imprimé (6) est disposée sur le deuxième élément plan (3) au moyen d'une couche adhésive (8) ou est appliquée sur le deuxième élément plan par une technique de stratification.

13. Dispositif de commande selon l'une des revendications précédentes, **caractérisé en ce que** l'élément de commande est réalisé sous la forme d'un afficheur.
